# EUROPÄISCHE PATENTANMELDUNG

(11) **EP 0 749 714 A1**
(43) Veröffentlichungstag der Anmeldung: **27.12.1996**
(21) Anmeldenummer: 96250105.2
(22) Anmeldetag: 10.05.1996
(51) Int. Cl.: A47J 43/20, A21B 3/13

(54) **Mehrteilige Backform**

(30) Priorität: 23.06.1995 DE 19523729
(71) Anmelder: H. Zenker GmbH + Co. KG Metallwarenfabrik, 86542 Aichach (DE)
(72) Erfinder: Beck, Ernst, 86551 Aichach-Oberwittelsbach (DE)
(74) Vertreter: Bärmann, Klaus

(57) **Zusammenfassung**

Die Erfindung betrifft eine mehrteilige Backform und ist dadurch gekennzeichnet, daß der Boden und/oder das Seitenteil aus mehreren Segmenten (1, 2, 3) bestehen. Dabei können der Boden und das Seitenteil voneinander getrennte Segmente aufweisen oder die Segmente können aus Teilen des Bodens und des Seitenteils der Backform bestehen. Durch die Verwendung gleicher oder unterschiedlicher Segmente ist es möglich, die Backform in ihrer Größe zu verändern und so auf eine gewünschte Kuchengröße einzustellen.

## Beschreibung

Die Erfindung betrifft eine Backform nach dem Oberbegriff des Anspruchs 1.

Es sind mehrteilige Backformen mit separatem Boden und Seitenteil bekannt. Die bekannteste dieser Backformen ist die Springform, bei der das Seitenteil mittels eines Spannverschlusses auf den Rand des Bodens gedrückt wird. Bekannt sind auch Backformen mit einem in sich geschlossenen nach oben konisch verlaufenden Seitenteil, in das ein Boden einsetzbar ist.

Der Nachteil dieser Backformen besteht darin, daß mit jeder Backform nur Kuchen einer bestimmten Größe herstellbar ist. Für die Herstellung von Kuchen unterschiedlicher Größe sind deshalb komplette Backformen unterschiedlicher Größe erforderlich, die zusätzlichen Lagerplatz benötigen und zusätzliche Kosten verursachen.

Der Erfindung liegt deshalb die Aufgabe zugrunde, eine Backform für die Herstellung von Kuchen unterschiedlicher Größe zu schaffen, so daß der Bedarf an Lagerraum für die Backformen und die notwendigen Kosten verringert werden.

Erfindungsgemäß wird das gemäß den kennzeichnenden Merkmalen des Anspruchs 1 erreicht.

Bei einer mehrteiligen Backform besteht der Boden und/oder das Seitenteil erfindungsgemäß aus mehreren Segmenten. Dabei können der Boden und das Seitenteil voneinander getrennte Segmente aufweisen. Die Segmente können aber auch aus Teilen des Bodens und des Seitenteils der Backform bestehen. Durch die Verwendung gleicher oder unterschiedlicher Segmente ist es möglich, die Backform in ihrer Größe zu verändern und so auf eine gewünschte Kuchengröße einzustellen.

Die Segmente sind in mindestens einer Richtung gegeneinander verschiebbar.

In einer Ausführungsform besteht der Boden aus mindestens einem rechteckförmigen oder quadratischen Segment, dem sich mindestens ein Segment mit einem einseitig kurvenförmig verlaufenden Rand anschließt.

Bevorzugt besteht der Boden aus einem rechteckförmigen Segment, dem sich an zwei gegenüberliegenden Seiten je ein Segment anschließt, das einen gleich breiten Abschnitt wie das rechteckförmige Segment und einen sich anschließenden halbkreisförmigen Abschnitt aufweist. Die Größe des Bodens kann dadurch verändert werden, daß rechteckförmige Segmente unterschiedlicher Länge verwendet werden. Im Extremfall kann das rechteckförmige Segment auch entfallen, so daß der Boden nur aus den beiden Segmenten mit halbkreisförmigem Abschnitt zusammengesetzt ist.

Das Seitenteil besteht bevorzugt aus mehreren entsprechend der Kontur des Bodenrandes verlaufenden geraden und /oder gebogenen Segmenten. Dabei können die Segmente des Seitenteils insgesamt die Länge des rechteckförmigen und der sich anschließenden kurvenförmigen Bodensegmente aufweisen. Die Segmente können aber auch aus kürzeren Abschnitten zusammengesetzt sein.

Die Länge des Boden- und Seitenteils kann auch dadurch verändert werden, daß die Segmente unterschiedlich weit übereinander geschoben werden.

In einer Ausführungsform weisen die Segmente an ihren Rändern hohlprofilartige Bördelungen auf, wobei die Bördelungen unterschiedlicher Segmente übereinanderschiebbar sind.

Zur Einstellung bestimmter Längen ist es zweckmäßig, daß die Segmente an ihren Enden Rastelemente aufweisen. Als Rastelemente können quer zur Verschieberichtung der Segmente verlaufende Sicken vorgesehen sein.

Durch die Verwendung nur weniger gleicher oder unterschiedlicher Teile und durch das unterschiedlich weite Übereinanderschieben dieser Teile erhält man eine Backform, die in ihrer Größe in weiten Grenzen einstellbar ist.

Bei Verwendung von Segmenten als Seitenteile, die in gewissen Grenzen elastisch biegbar sind, können mit denselben Segmenten, die mehrere Rastungen aufweisen, in Verbindung mit Böden unterschiedlicher Durchmesser Backformen unterschiedlicher Durchmesser zur Verfügung gestellt werden.

In einer weiteren Ausführungsform besteht die mehrteilige Backform aus Segmenten, die aus Teilen des Bodens und des Seitenteils der Backform bestehen. Eine solche Backform besteht aus vier Segmenten, die in zwei senkrecht zueinander verlaufenden Richtungen gegeneinander verschiebbar sind.

Die Erfindung soll in einem Ausführungsbeispiel anhand von Zeichnungen erläutert werden. Es zeigen:
- Fig. 1: einen aus mehreren Segmenten bestehenden Boden in der Draufsicht;
- Fig. 2: den Boden der Fig.1 in einem Schnitt gemäß der Linie II-II;
- Fig. 3: einen Schnitt durch den Boden der Fig. 1 gemäß der Linie III-III;
- Fig. 4: eine perspektivische Ansicht eines rechteckigen Segmentes des Bodens;
- Fig. 5: eine perspektivische Ansicht eines Segmentes des Bodens mit kreisbogenförmigem Rand;
- Fig. 6: gebogene Segmente eines Seitenteils;
- Fig. 7: ein gerades Segment eines Seitenteils;
- Fig. 8: die schematische Darstellung der Anordnung der Segmente des Seitenteils am Rand des Bodens.
- Fig. 9: eine aus vier Segmenten bestehende Backform.

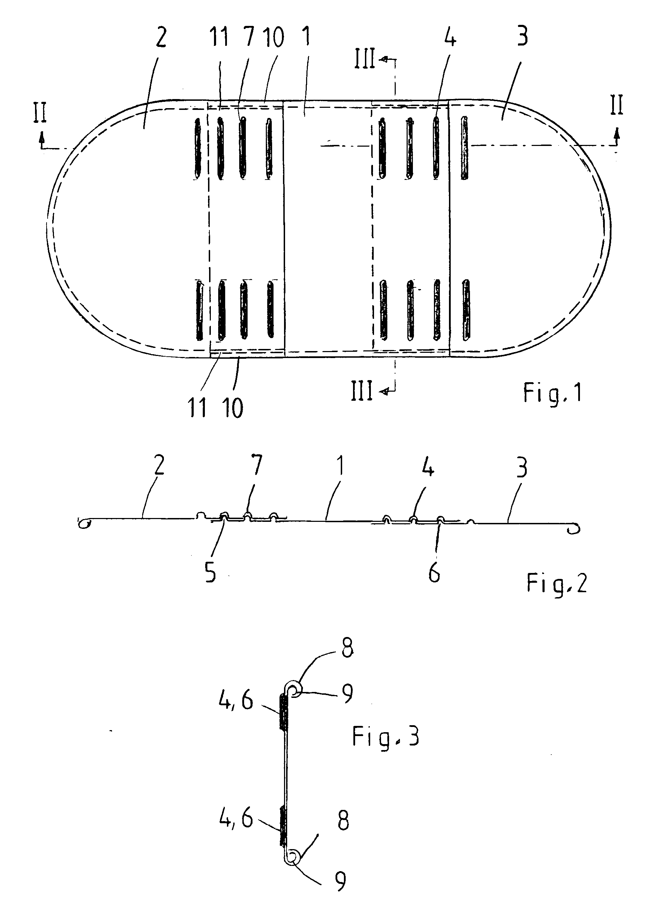

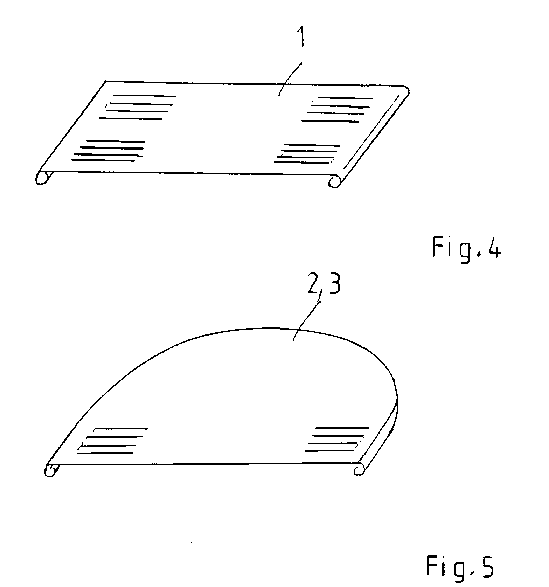

Das in der Fig. 1 dargestellte Bodenteil weist ein rechteckförmiges Segment 1 und zwei Segmente 2, 3 mit kreisförmigem Rand auf. Diese Segmente unterschiedlicher Form sind in den Figuren 4 und 5 als Einzelteil dargestellt. Es ist erkennbar, daß die Segmente 2, 3 auch einen Abschnitt mit parallelen Rändern aufweisen, wobei dieser parallele Abschnitt dieselbe Breite wie das rechteckförmige Segment 1 aufweist.

Jedes Segment weist einander zugeordnete Sicken auf. So sind im recheckförmigen Segment 1 Sicken 4 vorgesehen, denen im Segment 3 Sicken 6 zugeordnet sind. Weiterhin sind im rechteckförmigen Segment 1 Sicken 5 vorgesehen, denen im Segment 2 Sicken 7 zugeordnet sind. Die Sicken weisen eine solche unterschiedliche Abmessung auf, daß die Sicken 6 in die Sicken 4 und die Sicken 5 in die Sicken 7 einrasten können. Da die Sicken 6 und 7 der Segmente 2, 3 bei dieser Ausführungsform unterschiedliche Abmessungen aufweisen, können diese Segmente auch direkt ineinander eingerastet werden, d.h. der Boden der Backform kann auch ohne das Segment 1 ausgeführt sein. Die Sicken sind in den Figuren 4 und 5 nur schematisch dargestellt.

Die Sicken ermöglichen bei dieser Ausführungsform die feste Einstellung der Überlappung der Segmente. Die Verbindung der Segmente miteinander erfolgt über hohlprofilartige Bördelungen mit kreisförmigem Querschnitt am Rand der Segmente. So weist das Segment 1 an beiden Rändern Bördelungen 8 auf, denen Bördelungen 9 kleineren Durchmessers am Segment 3 zugeordnet sind. Dadurch kann das Segment 3 im Rand des Segments 1 gehalten und verschoben werden.

Weiterhin weist das Segment 1 an beiden Rändern Bördelungen 10 auf, denen hohlprofilartige Bördelungen 11 größeren Durchmessers am Segment 2 zugeordnet sind. An dieser Seite kann somit das Segment 1 im Rand des Segments 2 gehalten und verschoben werden.

Wegen der unterschiedlichen Durchmesser der Bördelung 9 am Segment 3 und der Bördelung 11 am Segment 2 können die Segmente 2, 3 auch direkt ineinandergeschoben werden.

Für die Änderung der Größe des Bodens können einerseits rechteckförmige Segmente unterschiedlicher Länge und andererseits unterschiedliche Raststellungen der Segmente 2 und 3 am rechteckförmigen Segment 1 ausgenutzt werden.

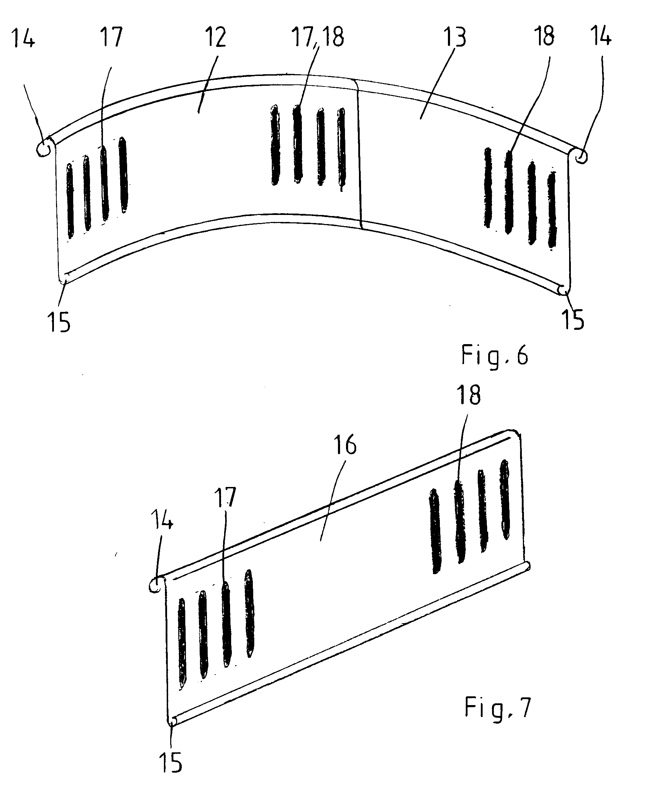

In den Figuren 6 und 7 sind Segmente des Seitenteils dargestellt, die um den Rand der Segmente 1, 2, 3 des Bodens gelegt werden. In der Fig. 6 sind zwei kreisförmig gebogene Segmente 12, 13 in perspektivischer Ansicht dargestellt. Deren oberer Rand ist mit einer hohlprofilartigen Bördelung 14 und dessen unterer Rand mit einer hohlprofilartigen Bördelung 15 versehen, die beide einen Kreisquerschnitt aufweisen. Die Bördelungen weisen an den Enden der Segmente solche an sich bekannten Unterschiede im Durchmesser auf, daß die Bördelungen ineinander geschoben werden können.

In der Fig. 7 ist ein gerades Segment 16 dargestellt, das hohlprofilartige Bördelungen 14, 15 gleicher Abmessung wie die Segmente 12, 13 aufweist, so daß die Ränder dieser Segmente ineinander geschoben werden können.

Alle Segmente weisen Sicken 17, 18 auf, die in der in Fig. 2 dargestellten Weise ineinanderrasten.

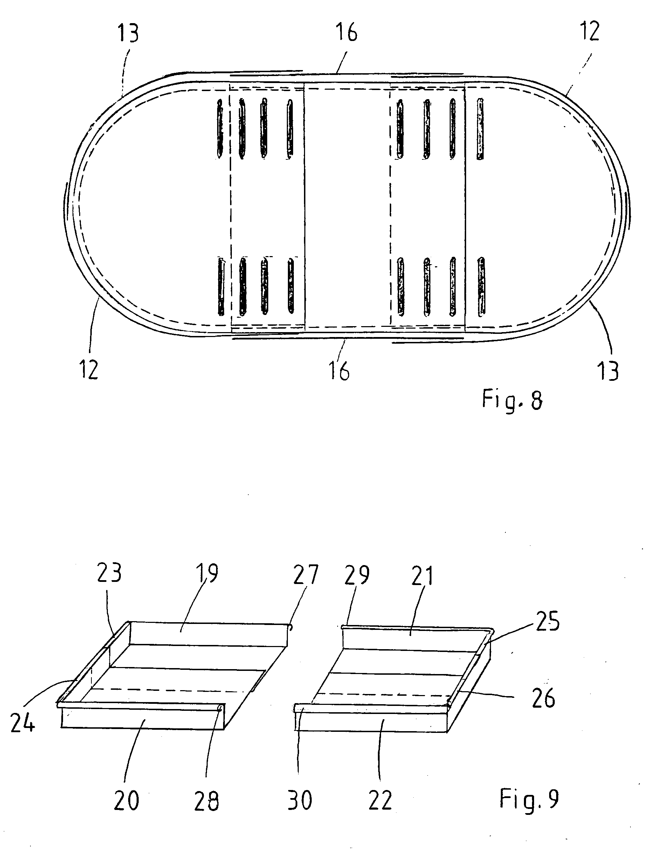

In der Fig. 8 ist schematisch dargestellt, wie die Segmente der Seitenteile am Rand des Bodens angeordnet sind. In der vorliegenden Ausführungsform bilden je ein gerades Segment 16 und je zwei gebogene Segmente 12, 13 das Seitenteil. Vor der Befestigung am Boden werden die Segmente ineinadergeschoben, wobei bis auf eine Trennstelle alle Segmente in der Stellung eingerastet sind, die der Krümmung und der Länge des Bodens entspricht. Ähnlich einem Seitenteil einer Springform wird das Seitenteil um den Rand des Bodens gelegt und anschließend werden die Segmente an der vorgesehenen Trennstelle weiter ineinander geschoben und entsprechend der Länge und Krümmung des Bodens eingerastet.

Anstelle eines ungeteilten geraden Segmentes 16 auf jeder Seite des Bodens sind auch hier geteilte Segmente möglich.

Mit den erfindungsgemäßen Boden- und Seitensegmenten können Backformen unterschiedlicher Größe zur Verfügung gestellt werden.

Im Ausführungsbeispiel der Fig. 9 ist eine Backform dargestellt, die aus vier Segmenten 19 bis 22 besteht. Jedes Segment besteht aus einem Abschnitt des Bodens und des Seitenteils der Backform. Wegen der besseren Übersichtlichkeit ist die Backform in zwei Hälften dargestellt. Die erste Hälfte besteht aus den Segmenten 19 und 20. Diese sind in ihren hohlprofilartig gebördelten Rändern 23, 24 verschiebbar angeordnet. Die den Boden bildenden Abschnitte der Segmente 19, 20 überlappen sich.

Die zweite Hälfte besteht aus den Segmenten 21 und 22. Diese sind ebenfalls in ihren hohiprofilartig geformten Rändern 25, 26 verschiebbar angeordnet, wobei sich die den Boden bildenden Abschnitte ebenfalls überlappen.

In der vorliegenden Ausführungsform sind die genannten zwei Hälften in ihren hohlprofilartig gebördelten Rändern 27 bis 30 ebenfalls verschiebbar angeordnet. Dabei weisen die Hohlprofile der Ränder 29 und 30 einen größeren Durchmesser als die Hohlprofile der Ränder 27 und 28 auf.

Vor dem Ineinanderschieben der Hälften werden diese auf die gewünschte Breite gebracht, wobei die erste Hälfte mit den Segmenten 19, 20 etwas breiter eingestellt wird als die zweite Hälfte, um ein Übereinanderschieben der Hälften zu ermöglichen. Anschließend werden die Hälften so übereinander geschoben, daß die Segmente 21, 22 über den Segmenten 19, 20 und die Ränder 27, 28 in den Rändern 29, 30 liegen. Durch eine unterschiedlich große Überlappung der Hälften läßt sich sich die Größe der Backform auch in dieser Richtung verstellen. Es ist ersichtlich, daß sich die Größe der Backform von einer Mindestgröße, die etwas größer als ein Segment ist, bis zu einer Maximalgröße, die wegen der notwendigen Überlappung etwas kleiner als die Fläche der vier Segmente ist, verändern läßt.

## Patentansprüche

1. Mehrteilige Backform,
**dadurch gekennzeichnet,**
daß der Boden und/oder das Seitenteil aus mehreren Segmenten (1, 2, 3, 12, 13, 16, 19, 20, 21, 22) bestehen.

2. Mehrteilige Backform nach Anspruch 1, **dadurch gekennzeichnet,** daß der Boden und das Seitenteil voneinander getrennte Segmente (1, 2, 3, 12, 13, 16) aufweisen.

3. Mehrteilige Backform nach Anspruch 1**, dadurch gekennzeichnet,** daß die Segmente (19, 20, 21, 22) aus Teilen des Bodens und des Seitenteils der Backform bestehen.

4. Backform nach mindestens einein der vorhergehenden Ansprüche, **dadurch gekennzeichnet,** daß die Segmente in mindestens einer Richtung gegeneinander verschiebbar sind.

5. Backform nach mindestens einem der vorhergehenden Ansprüche, **dadurch gekennzeichnet,** daß der Boden aus mindestens einem rechteckförmigen oder quadratischen Segment (1) besteht, dem sich mindestens ein Segment (2, 3) mit einem einseitig kurvenförmig verlaufenden Rand anschließt, wobei die Segmente gegeneinander verschiebbar sind.

6. Backform nach mindestens einem der vorhergehenden Ansprüche, **dadurch gekennzeichnet,** daß der Boden aus einem rechteckförmigen Segment (1) besteht, dem sich an zwei gegenüberliegenden Seiten je ein Segment (2, 3) anschließt, das einen gleich breiten Abschnitt wie das rechteckförmige Segment und einen sich anschließenden halbkreisförmigen Abschnitt aufweist.

7. Backform nach mindestens einem der vorhergehenden Ansprüche, **dadurch gekennzeichnet,** daß das Seitenteil aus mehreren entsprechend der Kontur des Bodenrandes verlaufenden geraden und /oder gebogenen Segmenten (1, 13, 16) besteht.

8. Backform nach mindestens einem der vorhergehenden Ansprüche, **dadurch gekennzeichnet,** daß die Segmente an ihren Rändern hohlprofilartige Bördelungen (8, 9, 14, 15, 27, 28, 29, 30) aufweisen, wobei die Bördelungen unterschiedlicher Segmente übereinanderschiebbar sind.

9. Backform nach mindestens einem der vorhergehenden Ansprüche, **dadurch gekennzeichnet,** daß die Segmente an ihren Enden Rastelemente aufweisen.

10. Backform nach Anspruch 14, **dadurch gekennzeichnet,** daß als Rastelemente quer zur Verschieberichtung der Segmente verlaufende Sicken (4, 5, 6, 7, 17, 18) vorgesehen sind.

11. Backform nach mindestens einem der vorhergehenden Ansprüche, **dadurch gekennzeichnet,** daß die Backform aus vier Segmenten (19, 20, 21, 22) besteht, die in zwei senkrecht zueinander verlaufenden Richtungen gegeneinander verschiebbar sind, wobei jedes Segment Teile des Bodens und des Seitenteils der Backform aufweist.
